**Europäisches Patentamt**

(19) **European Patent Office**

**Office européen des brevets**

(11) Publication number : **0 354 680 B1**

(12) **EUROPEAN PATENT SPECIFICATION**

(45) Date of publication of patent specification :
14.04.93 Bulletin 93/15

(51) Int. Cl.⁵ : **A23L 1/236,** A23G 3/30,
A23G 3/00

(21) Application number : **89307477.3**

(22) Date of filing : **24.07.89**

(54) Synergistic sweetening compositions containing chlorodeoxysugar and compositions containing same.

(30) Priority : **09.08.88 US 230282**

(43) Date of publication of application :
**14.02.90 Bulletin 90/07**

(45) Publication of the grant of the patent :
**14.04.93 Bulletin 93/15**

(84) Designated Contracting States :
**BE CH DE ES FR GB GR IT LI NL SE**

(56) References cited :
**EP-A- 0 267 809**
**EP-A- 0 298 922**
**WO-A-88/08672**
**DE-A- 2 700 036**
**GB-A- 2 153 651**
**GB-A- 2 154 850**
**US-A- 4 495 170**

(73) Proprietor : **WARNER-LAMBERT COMPANY**
**201 Tabor Road**
**Morris Plains New Jersey 07950 (US)**

(72) Inventor : **Faust, Steven Michael**
**4-51 Audubon Court**
**Stanhope New Jersey 07874 (US)**
Inventor : **Wong, Lucy Lee**
**31-21 78th Street**
**Jackson Heights New York 11370 (US)**
Inventor : **Cherukuri, Subraman Rao**
**10 Jean Drive**
**Towaco New Jersey 07082 (US)**

(74) Representative : **Jones, Michael Raymond et al**
**HASELTINE LAKE & CO. Hazlitt House 28**
**Southampton Buildings Chancery Lane**
**London WC2A 1AT (GB)**

EP 0 354 680 B1

**Description**

The present invention relates to sweetness synergy achieved by combinations of specific intense sweeteners in particular ratios. More particularly, this invention relates to a synergy of sweetening effect found between the combination of chlorodeoxy sucrose such as 4,1',6'-trichloro-4,1',6'-trideoxygalactosucrose (Sucralose), with non-bitter sweeteners, such as N-L-alpha-aspartyl-L-phenylalanine 1-methyl ester (Aspartame) or L-alpha-aspartyl-N-(2,2,4,4-tetramethyl-3-thietanyl)-D-alaninamide hydrate (Alitame). The synergistic sweetening composition may be utilized in a wide variety of ingestible compositions.

Intense sweeteners, that is, those natural or synthetic compounds having a sweetening intensity greater than that of sugar (sucrose) and oftentimes a lesser caloric value than sugar, are well known in the art. They are widely used in place of sugar in many low calorie and/or noncariogenic ingestible compositions. Those intense sweeteners having a calorie value result in a decreased caloric value for the composition containing such intense sweeteners because far less amounts are required to achieve optimum sweetness.

The intense sweeteners include a wide range of chemically distinct structures, and hence varying properties. These compounds include proteins such as thaumatin (Talin), dipeptides such as N-L-alpha-aspartyl-L-phenalamine 1-methyl ester (Aspartame) and dihydrochalcones. Most important to the present invention is the fact that each of these compounds has a distinct sweetening intensity as compared to sucrose and that this sweetening intensity is well documented. For example, the following compounds have these varying sweetening intensities:

| Compound | Intensity |
| --- | --- |
| | (as related to sucrose) |
| Soluble saccharin salts | 300 X |
| Cyclamate salts | 30 X |
| N-L-alpha-aspartyl-L-phenylalanine 1-methyl ester (Aspartame) | 180 X |
| Potassium salt of 6-methyl-1,2,3-oxathiazin-4(3H)-one-2,2-dioxide (Acesulfame-K) | 200 X |
| 4,1',6'-trichloro-4,1',6'-trideoxygalactosucrose (Sucralose) | 600 X |
| L-alpha-aspartyl-N-(2,2,4,4-tetramethyl-3-thietanyl)-D-alaninamide hydrate (Alitame) | 2000 X |

Each intense sweetener, being chemically distinct, presents a differing challenge with respect to actual use of such sweetener in ingestible compositions. For example, several intense sweeteners are known to have an associated bitter taste or off note, such as saccharin, stevioside, Acesulfame-K, glycyrrhizin, dipotassium glycyrrhizin, glycyrrhizic acid ammonium salt, and thaumatin (Talin), whereas other intense sweeteners present stability problems, such as Aspartame's instability with respect to aldehydes, ketones or moisture.

Accordingly, it has been postulated that combinations of sweetening agents may prove advantageous in that combining the compounds might enhance stability, provide reduced associated bitterness, and so forth.

U.S. Patent No. 4,495,170 to Beyts et al. discloses synergized sweetening compositions which are a mixture of a chlorodeoxysucrose and another sweetening agent having an associated bitter taste in a ratio of 4:1 to 1:4. Beytes et al. present data which support claims that their combinations in the disclosed ratios give greater sweetening intensity than that predicted by simple summation of the sweetening intensities contributed by each of the components. They use 4,1',6'-trichloro-4,1',6'-trideoxygalactosucrose combined with saccharin, stevioside, or Acesulfame-K for a sweetness synergy ranging from marginal up to about 17%.

U.S. Patent No. 4,535,396 to Stephens, Jr. et al. teaches a method of masking the bitter taste and enhancing the sweet taste of 6-methyl-1,2,3-oxathiazin-4(3H)-one-2,2-dioxide (Acesulfame) by combining it with 3-(L-aspartyl-D-alanamido)-2,2,4,4-tetramethylthietane, and a artificially sweetened composition comprising 0.5 to 20 parts by weight Acesulfame and 80 to 99.5 parts by weight 3-(L-aspartyl-D-alanamido)-2,2,4,4-tetramethylthietane. Synergism of sweetening intensity is reported as high as 24% at a ratio of 14/86 thietane derivative to Acesulfame.

U.S. Patent No. 4,158,068 to Von Rymon Lipinski et al. discloses and claims a sweetener mixture to improve the saccharose-like quality of the potassium salt of 3,4-dihydro-6-methyl-1,2,3-oxathiazine-4-one-2, 2-dioxide (Acetosulfame K). Acetosulfame K is combined with at least one sweetener selected from the group of aspartyl peptide ester sweeteners, sulfamate sweeteners, sulfimide sweeteners, and dihydrochalcone sweeteners.

GB Patent No. 2154850A discloses a sweetened beverage, such as cola, tea and coffee and a method for sweetening a beverage, such as cola, tea and coffee, by combining chlorodeoxysucrose and cyclamate (either alone or in combination with other low calorie sweeteners) in a ratio of 90:10 to 10:90 wherein the cyclamate (if combined with other sweeteners) is included in the amount of 30 to 100% of the cyclamate portion.

GB-A-2153651 discloses a method of sweetening a low-calorie, carbonated, acid-pH soft drink, e.g. a cola drink, by incorporating a combination of a chlorosucrose sweetener and a peptide sweetener in a ratio of 40:60 to 72:28. The combination is considered to be as close as possible to sucrose in its sweetening quality in such soft drinks.

WO88/08672 discloses chewing gum compositions comprising the sweetener sucralose, which chewing gum compositions are designed so that upon initial chewing the sucralose is released at a rate of less than 8 sucrose units per minute and 10 minutes later during chewing it is released at a rate of greater than 3 sucrose units per minute. The compositions may also include fast release sweeteners such as aspartame for initial sweetening impact.

Thus, a variety of intense sweeteners having specific sweetening intensities as related to sucrose are known. However, there is still a need for sweetening compositions having varying properties and sweetening intensities for use in different ingestible compositions. Thus, it would be desirable to provide synergistic combinations of sweetening agents for use in ingestible compositions. Such synergistic combinations would allow for a reduced total amount of sweetening composition, thereby reducing costs, stability problems, taste problems, calorie content problems and cariogenic properties. The present invention provides such synergistic sweetening compositions, and various ingestible compositions incorporating such synergistic sweetening compositions.

According to the present invention there is provided a synergistic sweetening composition, which comprises a chlorodeoxy derivative of sucrose and a non-bitter intense sweetener, wherein the non-bitter intense sweetener is a dipeptide sweetener and the amount of chlorodeoxy derivative of sucrose and the amount of the non-bitter intense sweetener is in a ratio of approximately 83.3:16.7.

This invention provides sweetening compositions which combine specific intense sweeteners in specific ratios to provide a synergy of sweetening intensity. That is, the additive amounts of the intense sweetener combinations disclosed provide a degree of sweetness intensity greater that expected by mere combination of the sweeteners and greater than each of the sweeteners alone. Surprisingly, it has been found that chlorodeoxysucrose derivatives in combination with a type of non-bitter intense sweetener in the claimed ratio provide up to about 20% sweetness intensity synergy over the sweetness intensity expected by mere combination of the sweetners, or alone.

The preferred chlorodeoxysucrose derivative is 4,1',6'-trichloro-4,1',6'-trideoxygalactosucrose, also known as 4,6-dichloro-4,6-dideoxy-alpha-D-galactopyranosyl-6-chloro-6-deoxy-beta-D-fructofuranoside (Sucralose). The non-bitter intense sweetener is a depeptide sweetener such as N-L-alpha-aspartyl-L-phenylalanine 1-methyl ester (Aspartame) and L-alpha-aspartyl-N-(2,2,4,-tetramethyl-3-thietanyl)-D-alaninamide hydrate (Alitame).

The synergistic sweetening composition contains the chlorodeoxysucrose derivative and the non-bitter dipeptide intense sweetener in the ratio of approximately 83.3:16.7.

Figure 1 depicts in bar graph format the sweetness intensity found for Sucralose/Aspartame solutions 1 to 9 (Example I).

Figure 2 depicts in graphic format the sweetness intensity, at various chew-out times, found for Sucralose/Aspartame chewing gums A to I (Example II). The straight line through each of the curves sets forth the expected sweetness intensity for the various sweetener ratios. The curve of actual intensities shows the range of ratios wherein sweetening synergy was found.

Figure 3 depicts in graphic format the sweetness intensity, at various chew-out times, found for Sucralose/Alitame chewing gums J to N (Example III).

The present invention relates to a particular combination of sweetening agents to provide a synergism of sweetening intensity. More specifically, this invention provides a synergistic sweetening composition, a method of sweetening various ingestible compositions including gums and confections, and particular gum and confectionary products sweetened using the inventive synergistic sweetening compositions.

The synergistic sweetening composition comprises a chlorodeoxy derivative of sucrose and a non-bitter dipeptide intense sweetener. Examples of chlorodeoxysucrose derivatives include, but are not limited to:

1. 1-chloro-1'-deoxysucrose;

2. 4-chloro-4-deoxy-alpha-D-galactopyranosyl-alpha-D-fructofuranoside, or 4-chloro-4-deoxygalactosucrose;

3. 4-chloro-4-deoxy-alpha-D-galactopyranosyl-1-chloro-1-deoxy-beta-D-fructofuranoside, or 4,1'-dichloro-4,1'-dideoxygalactosucrose;

4. 1'6'-dichloro-1'6'-dideoxysucrose;

5. 4-chloro-4-deoxy-alpha-D-galactopyranosyl-1,6-dichloro-1,6-dideoxy-beta-D-fructofuranoside, or 4,1', 6'-trichloro-4,1',6'-trideoxygalactosucrose;

6. 4,6-dichloro-4,6-dideoxy-alpha-D-galactopyranosyl-6-chloro-6-deoxy-beta-D-fructofuranoside or 4,6, 6'-trichloro-4,6,6'-trideoxygalactosucrose;

7. 6,1',6'-trichloro-6,1',6'-trideoxysucrose;

8. 4,6-dichloro-4,6-dideoxy-alpha-D-galactopyranosyl-1,6-dichloro-1,6-dideoxy-beta- D-fructofuranoside, or 4,6,1',6'-tetrachloro-4,6,1',6'-tetradeoxygalactosucrose; and

9. 4,6,1'6'-tetrachloro-4,6,1',6'-tetradeoxysucrose.

In a preferred embodiment, 4-chloro-4-deoxy-alpha-D-galactopyranosyl-1,6-dichloro-1,6-dideoxy-beta-D-fructofuranoside, also known as 4,1',6'-trichloro-4,1',6'-trideoxygalactosucrose (Sucralose) is utilized.

Non-bitter intense sweeteners, ie. dipeptide sweeteners, which may be used in combination with the chlorodeoxysucrose derivative include, but are not limited to:

1. N-L-alpha-aspartyl-L-phenylalanine 1-methyl ester (Aspartame);

2. L-alpha-aspartyl-N-(2,2,4,4-tetramethyl-3-thietanyl)-D-alaninamide hydrate (Alitame);

3. methyl esters of L-aspartyl-L-phenylglycerine;

4. methyl esters of L-aspartyl-L-2,5-dihydrophenylglycine;

5. L-aspartyl-2,5-dihydro-L-phenylalanine;

6. L-aspartyl-L-(1-cyclohexylen)-alanine.

See also, Mazur et al., J. Am. Chem. Soc., 91:10 (1969).

Structure-Taste Relationships of Some Dipeptides,

In a preferred embodiment, a dipeptide sweetener such as N-L-alpha-aspartyl-L-phenalanine 1-methyl ester (Aspartame) is combined with the chlorodeoxysucrose derivative. In an alternative preferred embodiment, L-alpha-aspartyl-N-(2,2,4,4-tetra-methyl-3-thietanyl)-D-alaninamide hydrate (Alitame) is combined with the chlorodeoxysucrose derivative.

The particular amounts of chlorodeoxysucrose derivative and non-bitter dipeptide-type intense sweetener necessary for synergy are in the ratio of (chlorodeoxysucrose): (non-bitter dipeptide) of approximately 83.3:16.7.

These particular compounds in these particular ratios yield a sweetening composition with surprising and unexpected sweetening intensity. The sweetening intensity, as compared to that of sucrose, is markedly greater than that expected by mere combination of the sweetening ingredients and addition of the respective sweetening intensities. Applicants have unexpectedly found that combination of the chlorodeoxysucrose with the non-bitter dipeptide sweetener resulted in a synergy of sweetening effect of up to 20%. Accordingly, this is advantageous in that the amounts of sweetener necessary to adequately sweeten an ingestible composition may be reduced by up to about 20% with no effect on the sweetness of such ingestible composition.

Another aspect of the present invention involves preparing various ingestible products, such as foodstuffs and beverages and including chewing gum and confectionery products, using the inventive synergistic sweetening composition as the sweetening agent therein. In accordance with the present invention, a synergistic sweetening composition as herein described is incorporated into a conventional chewing gum or confectionery formulation.

Once prepared, the inventive synergistic sweetening composition may be stored for future use or formulated with conventional additives, such as pharmaceutically acceptable carriers and confectionery ingredients, to prepare a wide variety of ingestible compositions. Such compositions may be in the form of beverages, foods, toothpaste, jellies, extracts, pharmaceuticals, proprietary products, gums, confections and so forth. The pharmaceutically acceptable carriers may be selected from a wide range of materials. Without being limited thereto, such materials include diluents, binders and adhesives, lubricants, disintegrants, colourants, flavourings, sweeteners and miscellaneous materials such as buffers and adsorbents in order to prepare a particular composition. The preparation of confectionery and chewing gum products is historically well known.

With regard to chewing gum formulations in particular, the gum base used in this invention may be any water-insoluble gum base well known in the art. Illustrative examples of suitable polymers in gum bases include without limitation substances of vegetable origin such as chicle, jelutong, gutta percha and crown gum; synthetic elastomers such as butadiene-styrene copolymer, isobutylene-isoprene copolymer, polyethylene, polyisobutylene and polyvinylacetate and mixtures thereof.

The amount of gum base employed will vary greatly depending on various factors such as the type of base used, consistency desired and other components used to make the final product. In general, amounts from 5.0% to 99.0% by weight of the final gum composition are acceptable with preferred amounts being 15.0% to 45.0% by weight.

Elastomer solvents, such as methyl, glycerol or pentaerythritol esters of rosins and gums or modified rosins and gums, for example, pentaerythritol ester of partially hydrogenated wood rosin, pentaerythritol ester of wood rosin, glycerol ester of wood rosin, glycerol ester of partially dimerized rosin, glycerol ester of polymerized rosin, glycerol ester of tall oil rosin and the like, as well as terpene resins including polyterpene may be employed in an amount ranging from 5.0 to 75.0% and preferably 45.0% to 70.0% by weight of the gum base.

Plasticizers or softeners such as lanolin, stearic acid, sodium stearate, potassium stearate, glyceryl triacetate, acetylated monoglyceride, glycerin, hydrogenated vegetable oils, natural waxes, petroleum waxes such as polyethylene waxes, paraffin waxes, microcrystalline waxes, fatty waxes, sorbitan monostearte, tallow, propylene glycol and mixtures thereof may also be incorporated into the gum base to obtain desirable texture and consistency properties. Such materials are generally employed in amounts of up to about 30.0% by weight and preferably from 3.0% to 7.0% by weight of the final gum base composition.

The chewing gum may likewise contain additional conventional additives, including fillers such as calcium carbonate, aluminum hydroxide, alumina, aluminum silicate, talc and combinations thereof; emulsifiers such as glyceryl monostearate and lecithin; colouring agents such as titanium dioxide and other dyes suitable for food, drug and cosmetic applications, and known as F.D.& C. dyes; and, other conventional chewing gum additives known to one having ordinary skill in the chewing gum art.

The flavouring agents useful in preparing ingestible products may be derived from plants, leaves, flowers, fruits, and so forth, and combinations thereof. Representative flavour oils include spearmint oil, peppermint oil, cinnamon oil and oil of wintergreen (methyl salicylate). Also useful are artificial, natural or synthetic fruit flavours such as citrus oils including lemon, orange, grape, lime and grapefruit, and fruit essences including apple, strawberry, cherry, pineapple and so forth.

The flavouring agent may be employed in the chewing gum in either liquid form and/or dried form. When employed in the latter method, suitable drying means such as spray drying the oil may be used. Alternatively, it may be absorbed onto a water soluble materials, such as cellulose, starch, sugar, maltodextrin, gum arabic and so forth. The actual techniques for preparing such dried forms are well known and do not constitute a part of this invention.

The amount of flavouring agent employed is also a matter of preference subject to such factors as strength desired and gum base employed. In general, amounts between 0.01% and 5.0% by weight of the final chewing gum composition have been found quite acceptable, with amounts between 0.1% and 3.0% being preferred, and 0.15% to 2.5% being most preferred.

The chewing gum composition may also contain a bulk sweetening agent. Such bulk sweetening agents may be water-soluble. Examples of such water-soluble bulk sweetening agents include, but are not limited to: monosaccharides, disaccharides and polysaccharides such as xylose, ribose, glucose, mannose, galactose, fructose, dextrose, sucrose, sugar, maltose, partially hydrolyzed starch, or corn syrup solids and sugar alcohols such as sorbitol, sylitol, mannitol, maltitol, isomalt, hydrogenated starch hydrolysate and mixtures thereof. The water-soluble bulk sweeteners described above are preferably used in amount of 2.0% to 75.0% by weight, and most preferably 10.0% to 65.0% by weight of the final chewing gum composition.

The synergistic sweetening composition may be incorporated into the chewing gum composition in amounts of 0.0025% to 5.0%, and preferably 0.005% to 2.0% by weight of the final chewing gum composition. These amounts are necessary to achieve the desired level of sweetness independent from the flavour level achieved from the flavour oil.

The synergistic sweetening composition may be incorporated into an otherwise conventional chewing gum formulation using otherwise conventional chewing gum formulations using standard techniques and equipment known to those skilled in the art.

In a typical embodiment the chewing gum base is blended with a plasticizer together with other additives such as fillers, bulking agents, softeners, an colouring agents under heat to plasticize the blend as well as to modulate the hardness, viscoelasticity and formability of the base. The heating temperature may vary widely but is for practical purposes preferably around 70°C to about 120°C. The chewing gum base is then blended with the flavouring agents and intense sweeteners which may have been previously blended with other ingredients. Once blending is achieved, the chewing gum formulation is removed and formed into any suitable shape. The chewing gums of the invention may be in any form known in the art, such as stick gum, slab gum, chunk gum, shredded gum, coated gum, as well as centre-filled gum.

The preparation of confectionery formulations is historically well known and has changed little through the years.

The hard boiled candy is prepared from a mixture of sugar and other carbohydrates that are kept in an amorphous or glassy condition. This form can be considered a solid syrup of sugars generally having from 0.5% to 1.5% moisture. Such materials normally contain up to 92.0% corn syrup, up to 55.0% sugar and from 0.1% to 5.0% water. The syrup component generally is prepared from corn syrups high in fructose, but may include other materials. Further ingredients such as flavourings, sweeteners, acidulents and colourants may also be added.

In contrast, compressed tablet confections contain particular materials and are formed into structure under pressure. They generally contain sugars in amounts up to 95.0% and typical tablet excipients such as binders and lubricants as well as flavours and colourants.

Soft confection may also be prepared. These materials contain two primary components, namely a high boiling syrup such as corn syrup, and a relatively light textured frappe, generally prepared from gelatin, egg albumen, milk proteins such as casein, vegetable proteins such as soy protein, which are added to a gelatin solution and rapidly mixed at ambient temperature to form an aerated sponge-like mass. The frappe is generally relatively light, and may, for example, range in density from 0.5 to about 0.7g/cm³. The frappe is then added to the molten candy base and mixed until homogenous at temperatures between 65.6°C (150°F) and 121°C (250°F). The composite can then be added as the temperature of the mix is lowered below the melting point of the matrix whereupon additional ingredients are added such as flavours, and colourants. The formulation is further cooled and formed to pieces of desired dimensions.

A general discussion of the various forms of confections may be found in H. A. Lieberman and L. Lachman, <u>Pharmaceutical Dosage Forms: Tablets</u>, Volume 1, Marcel Dekker, Inc., New York, N.Y.

It should be mentioned that the apparatus useful in accordance with preparing the synergistic sweetening composition-containing ingestible compositions comprises those cooking and mixing apparatuses well known in the ingestible product, including chewing gum and confectionery, manufacturing arts, and therefore the selection of specific apparatus will be apparent to the artisan.

The following examples are either comparative or illustrative of the invention, but are not deemed to be limiting thereof. All percentages used herein are based by weight of the final composition unless otherwise noted.

## EXAMPLE 1

### Determination of Synergistic Sweetening Agent Combination in Solution.

Initial stock solutions of 4,1',6'-trichloro-4,1',6'-trideoxygalactosucrose (Sucralose) and N-L-alpha-aspartyl-L-phenylalanine 1-methyl ester (Aspartame) were prepared. Aspartame was prepared in a 1.0% solution and Sucralose was prepared in a 0.30% solution. These stock solutions were then combined to formulate test solutions in the following ratios:

| Solution | % Sucralose | % Aspartame |
|---|---|---|
| 1 | 100 | 0 |
| 2 | 91.7 | 8.3 |
| Inventive: 3 | 83.3 | 16.7 |
| 4 | 75.0 | 25.0 |
| 5 | 66.7 | 33.3 |
| 6 | 58.3 | 41.7 |
| 7 | 50.0 | 50.0 |
| 8 | 25.0 | 75.0 |
| 9 | 0 | 100 |

On a relative scale of sucrose = 1, Sucralose = 600X and Aspartame = 180X, the above set forth percentages of sweeteners in solution 1 and solution 9 should produce equivalent sweetening intensities. Varying the amounts of Sucralose and Aspartame by percentages related to the above defined end points should produce, in solutions 2 through 8, equivalent sweetening intensities. Surprisingly, this was found to be incorrect.

An expert taste panel consisting of 7 persons having experience in the organoleptic evaluation of ingestible products, including sweetening agents, evaluated the solutions described above and found the following sweetening intensities:

| Solution | | Sweetening Intensity |
|---|---|---|
| | 1 | + |
| | 2 | + + |
| Inventive: | 3 | + + + + |
| | 4 | + + + |
| | 5 | + + + |
| | 6 | + + |
| | 7 | + |
| | 8 | + |
| | 9 | + |

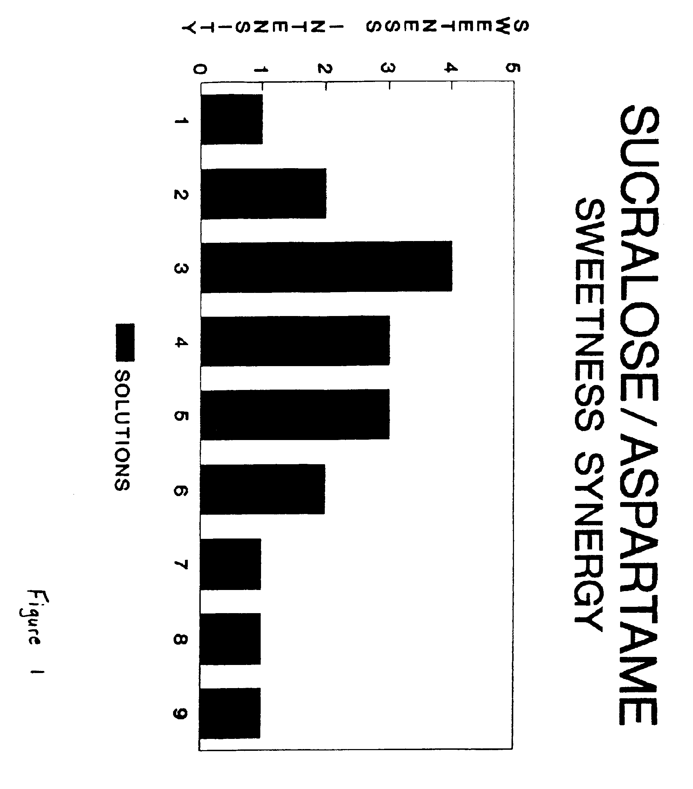

These findings are also graphically depicted in Figure 1.

The solutions in the ratio of sucralose:aspartame (deoxychlorosucrose:non-bitter dipeptide intense sweetener) showed a synergy of sweetening intensity at about 65:35 to about 91.7:8.3, more markedly at about 72:28 to 90:10, and most markedly at the claimed ratio of approximately 83.3:16.7.

## EXAMPLE II

### Determination of Synergistic Sweetening Agent Combination in Chewing Gum

Chewing gums incorporating Sucralose and Aspartame were prepared in accordance with the ratios of synergy found in Example 1 above by conventional gum manufacturing techniques. The gums had the following formulations:

Inventive:

| EXAMPLE | A | B | C | D | E | F | G | H | I |
|---|---|---|---|---|---|---|---|---|---|
| Ingredient Gum Base | 23.0 | 23.0 | 23.0 | 23.0 | 23.0 | 23.0 | 23.0 | 23.0 | 23.0 |
| Flavour | 1.3 | 1.3 | 1.3 | 1.3 | 1.3 | 1.3 | 1.3 | 1.3 | 1.3 |
| Softeners | 15.5 | 15.5 | 15.5 | 15.5 | 15.5 | 15.5 | 15.5 | 15.5 | 15.5 |
| Bulk Sweeteners | 59.9475 | 59.9228 | 59.8978 | 59.8731 | 59.8484 | 59.8234 | 59.7987 | 59.7244 | 59.6500 |
| Colourant | 0.2 | 0.2 | 0.2 | 0.2 | 0.2 | 0.2 | 0.2 | 0.2 | 0.2 |
| Sucralose | 0.0525 | 0.0481 | 0.0437 | 0.0394 | 0.0350 | 0.0306 | 0.0263 | 0.0131 | - |
| Aspartame | - | 0.0291 | 0.0585 | 0.0875 | 0.1166 | 0.1460 | 0.1750 | 0.2625 | 0.3500 |
| Ratio of Sucralose to Aspartame | 100:0 | 91.7:8.3 | 83.3:16.7 | 75:25 | 6.7:33.3 | 58.3:41.7 | 50:50 | 25:75 | 0:100 |

EP 0 354 680 B1

An expert taste panel consisting of 10 persons having experience in the organoleptic evaluation of ingestible products, including chewing gums, evaluated chewing gums A through I, inclusive, as to their sweetening intensity at 30 sec., 2 min., 6 min., and 10 min. intervals. Their findings follow:

| Chewing Gum | | Sweetening Intensity |
|---|---|---|
| | A | + |
| | B | + + |
| Inventive: | C | + + + + |
| | D | + + + |
| | E | + + + |
| | F | + + |
| | G | + |
| | H | + |
| | I | + |

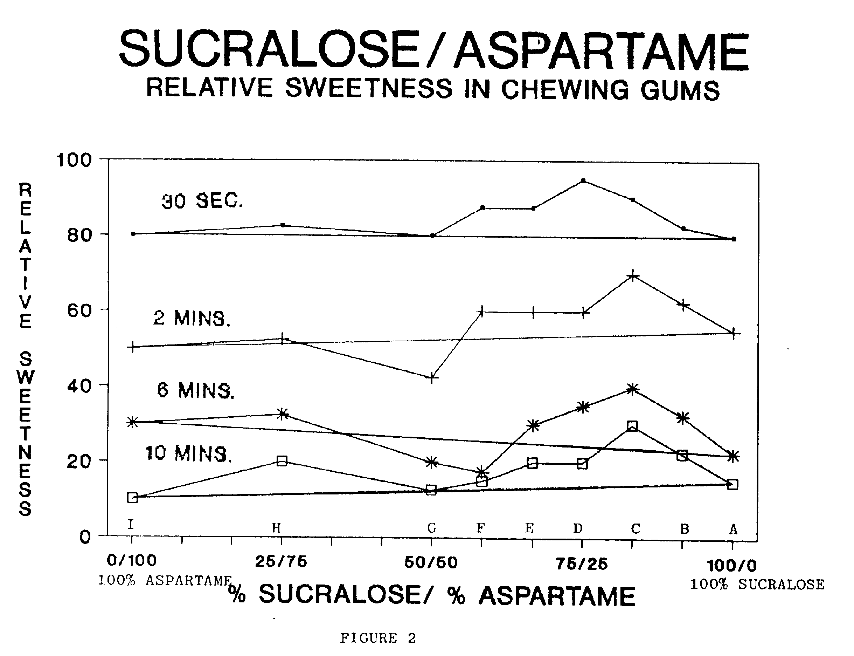

These findings are also graphically depicted in Figure 2, wherein sweetening intensity versus % Sucralose:% Aspartame is plotted. The straight lines running through each graph indicate the expected sweetening intensity.

It was concluded that chewing gums A, G, H and I exhibited equivalent sweetening intensity indicating little or no synergy of sweetening effect between the Sucralose and Aspartame at those ratios (100:0, 50:50, 25:75 and 0:100). Chewing gums B, C, D, E and F showed varying degrees of enhanced sweetening intensity indicating a synergy of effect between the sweeteners at about 65:35 to about 91.7:8.3. Greater synergy was shown at the ratio of about 72:28 to 90:10 and the greatest synergy of effect was shown at the inventive ratio of approximately 83.3:16.7.

EXAMPLE III

Determination of Synergistic Sweetening Agent Combination in Chewing Gum

Chewing gums incorporating Sucralose and Alitame were prepared in accordance with the ratios of synergy found in Example 1 above by conventional gum manufacturing techniques. The gums had the following formulations:

| EXAMPLE Ingredient | J | K | L | M | N |
|---|---|---|---|---|---|
| Gum Base | 23.0 | 23.0 | 23.0 | 23.0 | 23.0 |
| Flavour | 1.3 | 1.3 | 1.3 | 1.3 | 1.3 |
| Softeners | 12.5 | 12.5 | 12.5 | 12.5 | 12.5 |
| Bulk Sweeteners | 62.9475 | 62.9568 | 62.9662 | 62.9756 | 62.9850 |
| Colourant | 0.2 | 0.2 | 0.2 | 0.2 | 0.2 |
| Sucralose | 0.0525 | 0.0394 | 0.0263 | 0.0131 | – |
| Alitame | – | 0.0038 | 0.0075 | 0.0113 | 0.0150 |
| Ratio of Sucralose to Alitame | 100:0 | 75:25 | 50:50 | 25:75 | 0:100 |

An expert taste panel consisting of 10 persons having experience in the organoleptic evaluation of ingestible products, including chewing gums, evaluated chewing gums J through N, inclusive, as to their sweetening intensity at 30 sec., 2 min., and 6 min. intervals. Their findings follow:

| Chewing Gum | Sweetening Intensity |
|:---:|:---:|
| J | + |
| K | + + + |
| L | + |
| M | + |
| N | + |

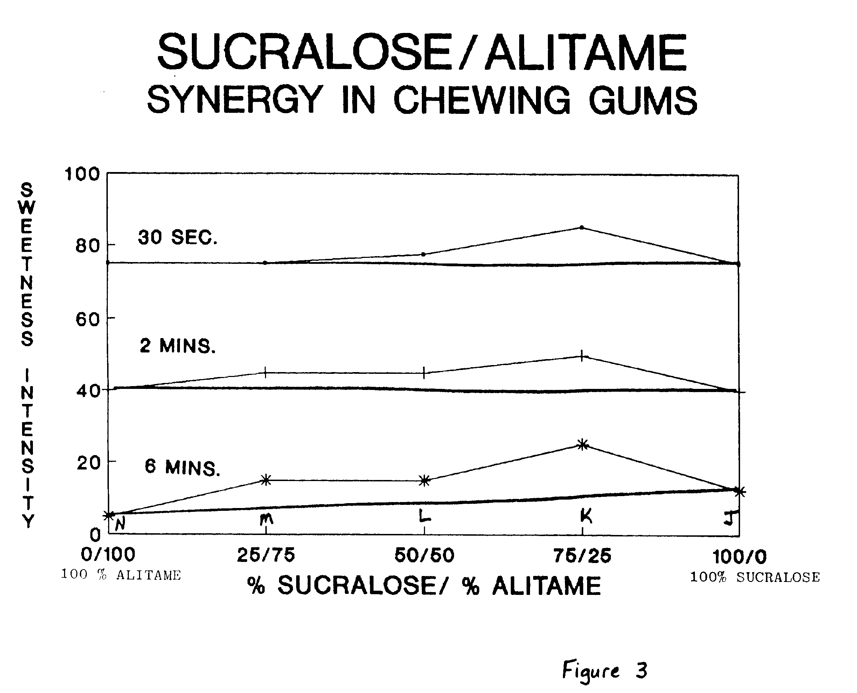

These findings are also graphically depicted in Figure 3, wherein sweetening intensity versus % Sucralose:% Alitame is plotted.

It was concluded that chewing gums J, L, M and N exhibited equivalent sweetening intensity indicating little or no synergy of sweetening effect between the Sucralose and Alitame at those ratios (100:0, 50:50, 25:75 and 0:100). Chewing gum K, showed enhanced sweetening intensity at a ratio of 75:25 which is in the region corresponding to that of the % Sucralose:% Aspartame synergy ratios. This indicates a synergy of effect between the sweeteners at about 65:35 to about 91.7:8.3, greater synergy at the ratio of about 72:28 to 90:10 and the greatest synergy of effect at the ratio of 83.3:16.7.

The ratios of chlorodeoxy derivative of sucrose to non-bitter intense sweetener referred to in this application are calculated by weight.

## Claims

**Claims for the following Contracting States : BE, FR, DE, GR, IT, NL, SE, CH and GB**

1. A synergistic sweetening composition, which comprises a chlorodeoxy derivative of sucrose and a non-bitter intense sweetener, wherein the non-bitter intense sweetener is a dipeptide sweetener and the amount of chlorodeoxy derivative of sucrose and the amount of the non-bitter intense sweetener is in a ratio of approximately 83.3:16.7.

2. A composition according to claim 1, wherein the chlorodeoxy derivative of sucrose is 4,1',6'-trichloro-4,1',6'-trideoxygalactosucrose.

3. A composition according to claim 1 or 2, wherein the non-bitter dipeptide intense sweetener is selected from N-L-alpha-aspartyl-L-phenylalanine 1-methyl ester and L-alpha-aspartyl-N-(2,2,4,4-tetramethyl-3-thietanyl)-D-alaninamide hydrate.

4. An ingestible product containing a synergistic sweetening composition according to any one of claims 1 to 3.

5. A sweetened chewing gum composition, which comprises a chewing gum base and a synergistic sweetening composition according to any one of claims 1 to 3.

6. A sweetened confectionery composition, which comprises a confectionery base and a synergistic sweetening composition according to any one of claims 1 to 3.

7. A process for the preparation of a synergistic sweetening composition according to any one of claims 1 to 3, which process comprises admixing the chlorodeoxy derivative of sucrose with the non-bitter intense sweetener.

8. A process for sweetening ingestible compositions, which comprises adding thereto a synergistic sweetening composition according to any one of claims 1 to 3.

**Claims for the following Contracting State : ES**

1. A process for the preparation of a synergistic sweetening composition, which process comprises admixing a chlorodeoxy derivative of sucrose and a non-bitter intense sweetener, wherein the non-bitter intense sweetener is a dipeptide sweetener and the amount of chlorodeoxy derivative of sucrose and the amount of the non-bitter intense sweetener is in a ratio of approximately 83.3:16.7.

2. A process according to claim 1, wherein the chlorodeoxy derivative of sucrose is 4, 1',6'-trichloro-4,1',6'-trideoxygalactosucrose.

3. A process according to claim 1 or 2, wherein the non-bitter dipeptide intense sweetener is selected from N-L-alpha-aspartyl-L-phenylalanine 1-methyl ester and L-alpha-aspartyl-N-(2,2,4,4-tetramethyl-3-thietanyl)-D-alaninamide hydrate.

4. A process for the preparation of an ingestible product which process comprises adding thereto a synergistic sweetening composition prepared according to any one of claims 1 to 3.

5. A process for the preparation of a sweetened chewing gum composition, which process comprises admixing a chewing gum base and a synergistic sweetening composition prepared according to any one of claims 1 to 3.

6. A process for the preparation of a sweetened confectionery composition, which process comprises admixing a confectionery base and a synergistic sweetening composition prepared according to any one of claims 1 to 3.

7. A process for sweetening ingestible compositions, which comprises adding thereto a synergistic sweetening composition prepared according to any one of claims 1 to 3.

**Patentansprüche**

**Patentansprüche für folgende Vertragsstaaten : BE, FR, DE, GR, IT, NL, SE, CH, GB**

1. Synergistische Süßungsmasse, umfassend ein Chlordesoxyderivat von Saccharose und ein nicht-bitteres intensives Süßungsmittel, wobei das nicht-bittere intensive Süßungsmittel aus einem Dipeptidsüßungsmittel besteht und die Menge an Chlordesoxyderivat von Saccharose und die Menge des nicht-bitteren intensiven Süßungsmittels in einem Verhältnis von etwa 83,3:16,7 vorliegen.

2. Masse nach Anspruch 1, wobei das Chlordesoxyderivat von Saccharose aus 4,1',6'-Trichlor-4,1',6'-tridesoxygalactosaccharose besteht.

3. Masse nach Anspruch 1 oder 2, wobei das nicht-bittere intensive Dipeptid-Süßungsmittel aus N-L-alpha-Aspartyl-L-phenylalanin 1-Methylester und L-alpha-Aspartyl-N-(2,2,4,4-tetramethyl-3-thietanyl)-D-alaninamidhydrat ausgewählt ist.

4. (In Form eines Nahrungsmittels) Aufnehmbares Produkt mit einer synergistischen Süßungsmasse nach einem der Ansprüche 1 bis 3.

5. Gesüßte Kaugummimasse, umfassend eine Kaugummigrundlage und eine synergistische Süßungsmasse nach einem der Ansprüche 1 bis 3.

6. Gesüßte Süßwarenmasse, umfassend eine Süßwarengrundlage und eine synergistische Süßungsmasse nach einem der Ansprüche 1 bis 3.

7. Verfahren zur Zubereitung einer synergistischen Süßungsmasse nach einem der Ansprüche 1 bis 3 durch Vermischen des Chlordesoxyderivats von Saccharose mit dem nicht-bitteren intensiven Süßungsmittel.

8. Verfahren zum Süßen von (als Nahrungsmittel) aufnehmbaren Massen durch Zusatz einer synergistischen Süßungsmasse nach einem der Ansprüche 1 bis 3 zu diesen.

**Patentansprüche für folgenden Vertragsstaat : ES**

1. Verfahren zur Zubereitung einer synergistischen Süßungsmasse durch Vermischen eines Chlordesoxyderivats von Saccharose mit einem nicht-bitteren intensiven Süßungsmittel, wobei das nicht-bittere intensive Süßungsmittel aus einem Dipeptid-Süßungsmittel besteht und die Menge an Chlordesoxyderivat von Saccharose und die Menge an dem nicht-bitteren intensiven Süßungsmittel in einem Verhältnis von etwa 83,3:16,7 vorliegen.

2. Verfahren nach Anspruch 1, wobei das Chlordesoxyderivat von Saccharose aus 4,1',6'-Trichlor-4,1',6'-tridesoxy- galactosaccharose besteht.

3. Verfahren nach Anspruch 1 oder 2, wobei aus nicht-bittere intensive Dipeptid-Süßungsmittel aus N-L-alpha-Aspartyl-L-phenylalanin 1-Methylester und L-alpha-aspartyl-N-(2,2,4,4-tetramethyl-3-thietanyl)-D-alaninamidhydrat ausgewählt ist.

4. Verfahren zur Zubereitung eines (als Nahrungsmittel) aufnehmbaren Produkts durch Zusatz einer gemäß einem der Ansprüche 1 bis 3 hergestellten synergistischen Süßungsmasse zu diesem.

5. Verfahren zur Zubereitung einer gesüßten Kaugummimasse durch Vermischen einer Kaugummigrundlage mit einer gemäß einem der Ansprüche 1 bis 3 hergestellten synergistischen Süßungsmasse.

6. Verfahren zur Zubereitung einer gesüßten Süßwarenmasse durch Vermischen einer Süßwarengrundlage mit einer gemäß einem der Ansprüche 1 bis 3 hergestellten synergistischen Süßungsmasse.

7. Verfahren zum Süßen von (als Nahrungsmittel) aufnehmbaren Massen durch Zusatz einer synergistischen Süßungsmasse nach einem der Ansprüche 1 bis 3 zu diesen.

## Revendications

### Revendications pour les Etats contractants suivants : BE, FR, DE, GR, IT, NL, SE, CH, GB

1. Composition édulcorante synergique qui comprend un dérivé chlorodésoxy du saccharose et un édulcorant puissant non-amer, dans laquelle l'édulcorant puissant non-amer est un édulcorant dipeptidique et la quantité de dérivé chlorodésoxy du saccharose et la quantité de l'édulcorant puissant non-amer est dans un rapport d'environ 83,3/16,7.

2. Composition suivant la revendication 1, dans laquelle le dérivé chlorodésoxy du saccharose est le 4,1',6'-trichloro-4,1',6'-tridésoxygalactosaccharose.

3. Composition suivant la revendication 1 ou 2, dans laquelle l'édulcorant puissant dipeptidique non amer est choisi parmi l'ester 1-méthylique de N-L-alpha-aspartyl-L-phénylalanine et l'hydrate de L-alpha-aspartyl-N-(2,2,4,4-tétraméthyl-3-thiétanyl)-D-alaninamide.

4. Produit pouvant être ingéré contenant une composition édulcorante synergique suivant l'une quelconque des revendications 1 à 3.

5. Composition de gommes à mâcher édulcorée qui comprend une base de gomme à mâcher et une composition édulcorante synergique suivant l'une quelconque des revendications 1 à 3.

6. Composition de confiserie édulcorée qui comprend une base de confiserie et une composition édulcorante synergique suivant l'une quelconque des revendications 1 à 3.

7. Procédé pour la préparation d'une composition édulcorante synergique suivant l'une quelconque des revendications 1 à 3, qui comprend le mélange d'un dérivé chlorodésoxy du saccharose avec l'édulcorant puissant non-amer.

8. Procédé pour édulcorer des compositions pouvant être ingérées, qui comprend l'addition à celle-ci d'une composition édulcorante synergique suivant l'une quelconque des revendications 1 à 3.

### Revendications pour l'Etat contractant suivant : ES

1. Procédé pour la préparation d'une composition édulcorante synergique, qui comprend le mélange d'un dérivé chlorodésoxy du saccharose et d'un édulcorant puissant non-amer, dans lequel l'édulcorant puissant non-amer est un édulcorant dipeptidique et la quantité de dérivé chlorodésoxy du saccharose et la quantité de l'édulcorant puissant non-amer sont dans un rapport d'environ 83,3/16,7.

2. Procédé suivant la revendication 1, dans lequel le dérivé chlorodésoxy du saccharose est le 4,1',6'-trichloro-4,1',6'-tridésoxygalactosaccharose.

3. Procédé suivant la revendication 1 ou 2, dans lequel l'édulcorant puissant dipeptidique non amer est choisi parmi l'ester 1-méthylique de N-L-alpha-aspartyl-L-phénylalanine et l'hydrate de L-alpha-aspartyl-N-(2,2,4,4-tétraméthyl-3-thiétanyl)-D-alaninamide.

4. Procédé pour la préparation d'une produit pouvant être ingéré qui comprend l'addition à celui-ci d'une composition édulcorante synergique préparée suivant l'une quelconque des revendications 1 à 3.

5. Procédé pour la préparation d'une composition de gommes à mâcher édulcorée, qui comprend le mélange d'une base de gomme à mâcher et d'une composition édulcorante synergique préparée suivant l'une quelconque des revendications 1 à 3.

6. Procédé pour la préparation d'une composition de confiserie édulcorée, qui comprend le mélange d'une base de confiserie et d'une composition édulcorante synergique préparée suivant l'une quelconque des revendications 1 à 3.

7. Procédé pour édulcorer des compositions pouvant être ingérées, qui comprend l'addition à celles-ci d'une composition édulcorante synergique préparée suivant l'une quelconque des revendications 1 à 3.

# SUCRALOSE/ASPARTAME
## SWEETNESS SYNERGY

Figure 1

EP 0 354 680 B1

15

# SUCRALOSE/ASPARTAME
## RELATIVE SWEETNESS IN CHEWING GUMS

FIGURE 2

EP 0 354 680 B1

16

SUCRALOSE / ALITAME
SYNERGY IN CHEWING GUMS

Figure 3